# EUROPEAN PATENT APPLICATION

(11) **EP 4 804 212 A1**
(43) Date of publication of application: **09.09.2026**
(21) Application number: 25171208.9
(22) Date of filing: 17.04.2025
(51) Int. Cl.: H01B 7/42

(54) **CHARGING CABLE HAVING COOLING FUNCTION**

(30) Priority: 06.03.2025 KR 20250028897
(71) Applicant: Kyungshin Corp., Incheon 21999 (KR); Kyungshin Cable Co., Ltd., Cheonan-si, Chungcheongnam-do 31026 (KR)
(72) Inventor: SHIN, Hee Joon, 22778 Incheon (KR); JUNG, Jae Ik, 31161 Chungcheongnam-do (KR); PARK, Jung Woo, 31112 Chungcheongnam-do (KR); PARK, Nu Ri, 17877 Gyeonggi-do (KR)
(74) Representative: Michalski Hüttermann & Partner mbB

(57) **Abstract**

Disclosed is an invention related to a charging cable having a cooling function. The disclosed charging cable having a cooling function includes a power cable formed of one or more cables each including an outer insulating jacket surrounding a conductor and a cooling part which prevents overheating of the conductor.

## Description

### CROSS-REFERENCE TO RELATED APPLICATION

This application claims priority to and the benefit of Korean Patent Application No. 2025-0028897, filed on March 06, 2025, the disclosure of which is incorporated herein by reference in its entirety.

### BACKGROUND

### 1. Field of the Invention

The present invention relates to a charging cable having a cooling function, and more specifically, to a charging cable having a cooling function which includes a refrigerant channel in at least one of the inside of a power cable and the outside of the power cable to allow a refrigerant liquid to flow so as to reduce an amount of heat generated by a conductor, and thereby thermal damage to the charging cable and a charging connector is prevented, thus overheating of the conductor is prevented, a charging time is reduced by increasing an amount of current, and an outer diameter and a weight of the cable are minimized to improve a user's handling convenience.

### 2. Discussion of Related Art

With the spread of electric vehicles, the installation of electric vehicle chargers is increasing. In addition, quick chargers capable of quick charging are being spread to allow charging in a short time.

Unlike slow charging, an output voltage of a quick charger for quick charging ranges from DC 50 V to 1000 V, and an output current ranges from 110 A to 500 A, and thus output power ranges from about 50 to 500 kW, and the time it takes the quick charger to charge the electric vehicle is only about 10 minutes to 30 minutes. The output current of the quick charging is expected to increase according to the battery capacity and charging technology of the electric vehicle.

In such a quick charger, a charging cable for an electric vehicle is connected to a main body, a connector of a charger is mounted on an end portion of the charging cable, the connector of the charger is mounted on an electric vehicle connector provided on the electric vehicle to supply electricity from the electric vehicle charger to the electric vehicle.

As the related art, "Charging cable for electric vehicle" has been disclosed in Korean Laid-Open Patent No. 10-2018-0096259.

The above-described related art is background technology for facilitating understanding of the present invention and does not mean an existing technology widely known to those skilled in the art.

### SUMMARY OF THE INVENTION

In the conventional electric vehicle charging cable, since charging power supplied from a charger should be increased using a high voltage and a high current in order to reduce a charging time, there is a disadvantage of increasing the diameter and weight of the electric vehicle charging cable due to a trend of increasing the diameter of a conductor in order to increase a current carrying capacity, and accordingly, there is a disadvantage that a user who wants to perform charging should lift and move the assembly of the charging cable and connector and insert the connector into a charging port of a vehicle, which requires a lot of force.

In addition, in the conventional electric vehicle charging cable, when a size of a conductor increases, a structure for connecting the conductor to the connector is complicated, and thus there is a problem of increasing costs, and when the size exceeds a proper size, there is a problem that the connection is impossible.

In addition, in the conventional electric vehicle charging cable, since an amount of generated heat increases while charging is performed through the flow of a large amount of current, there is a risk of fire.

Accordingly, there is a need to improve this.

The present invention is directed to providing a charging cable having a cooling function which includes a refrigerant channel in at least one of the inside of a power cable and the outside of the power cable to allow a refrigerant liquid to flow so as to reduce an amount of heat generated by a conductor, and thereby thermal damage to the charging cable and a charging connector is prevented, thus overheating of the conductor is prevented, a charging time is reduced by increasing an amount of a current, and an outer diameter and a weight of the cable are minimized to improve a user's handling convenience.

The present invention is also directed to providing a charging cable having a cooling function, in which a refrigerant tube formed of a metal material and having flexibility is provided in a power cable, and even when the refrigerant tube is bent due to deformation of the power cable, a diameter of the refrigerant tube is maintained to maintain an amount of transferred refrigerant.

One aspect of the present invention provides a charging cable having a cooling function including a power cable formed of one or more cables each including a conductor and an outer insulating jacket surrounding the conductor and a cooling part which prevents overheating of the conductor.

The charging cable having a cooling function may include a signal cable disposed along the power cable, a grounding cable disposed along the power cable, and a sheath which surrounds the power cable formed of one or more cables, the signal cable formed of one or more cables, and the grounding cable formed of one or more cables and is formed of an insulating material.

The power cable may be provided as at least two cables.

As a first embodiment, the cooling part may include a refrigerant tube formed at any one location of an inside of the power cable and an outside of the power cable and formed of a thermally conductive material, a refrigerant which fills the refrigerant tube and includes a liquid or non-liquid material, and a refrigerant supply part which supplies the refrigerant to one open side of the refrigerant tube formed of one or more tubes.

The refrigerant tube may include first tubes which include first one side flanges on one edges and first other side flanges at the other edges, wherein the plurality of first tubes are spaced a predetermined distance from each other in a central axis direction of the power cable, and formed in a tube shape, and second tubes which are disposed between the adjacent first tubes in the central axis direction of the power cable, include second other side flanges facing the first one side flanges and hooked on the first one side flanges and second one side flanges facing the first other side flanges and hooked on the first other side flanges, are formed in a tube shape, and are connected to the first tubes corresponding thereto.

The refrigerant may fill the entire inside of the power cable through a gap between the first one side flanges and the second other side flanges which face each other and a gap between the first other side flanges and the second one side flanges.

The power cable may include a temperature detection line at one or more locations of the inside and the outside of the power cable.

The refrigerant tube provided inside the power cable may be a thermally conductive material, and the refrigerant tube provided outside the power cable may be a thermally conductive material or thermally non-conductive material.

As a second embodiment, the cooling part may include a refrigerant which fills a gap between the conductor and the outer insulating jacket which correspond to each other or flows in the gap between the conductor and the outer insulating jacket which correspond to each other.

The cooling part may include partition protrusions protruding from at least one of the conductor and the outer insulating jacket, which correspond to each other, to be spaced a set distance from each other in a circumferential direction to divide the gap between the conductor and the outer insulating jacket.

The refrigerant may be a liquid with fluidity, and a circulation hose may be in contact with an outer circumferential surface of the outer insulating jacket and surrounded by the sheath along with the power cable formed of the one or more cables.

One open side and the other open side of the circulation hose may be connected to a refrigerant supply part, and the refrigerant supply part may guide the supply and forcible circulation of the liquid refrigerant.

As a third embodiment, the cooling part may include a refrigerant which fills an inside of each of the conductors formed in a tube shape or flows along the inside of the conductor and a refrigerant supply part which supplies the refrigerant to one open side of the conductor.

The cooling part may include a heat transfer member provided in the conductor formed in a tube shape to improve the heat exchange efficiency of the conductor through the refrigerant.

The heat transfer member may be disposed in a spiral shape inside the conductor in an axial direction to improve the efficiency of cold air transfer to the conductor.

The refrigerant supply part may guide the supply and forcible circulation of the liquid refrigerant.

The other open side of the conductor may be connected to a circulation hose, and the circulation hose may be connected to the refrigerant supply part.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a schematic view illustrating a charging system of an electric vehicle to which a charging cable having a cooling function is applied according to a first embodiment of the present invention;
FIG. 2 is a cross-sectional view illustrating the charging cable having a cooling function according to the first embodiment of the present invention;
FIG. 3 is a perspective view illustrating a main portion of a power cable of the charging cable having a cooling function according to the first embodiment of the present invention;
FIG. 4 is a cross-sectional view illustrating the main portion of the power cable of the charging cable having a cooling function according to the first embodiment of the present invention;
FIG. 5 is a schematic view illustrating a charging system of an electric vehicle to which a charging cable having a cooling function is applied according to a second embodiment of the present invention;
FIG. 6 is a cross-sectional view illustrating the charging cable having a cooling function according to the second embodiment of the present invention;
FIG. 7 is an enlarged perspective view illustrating a main portion of a power cable of the charging cable having a cooling function according to the second embodiment of the present invention;
FIG. 8 is a schematic view illustrating a charging system of an electric vehicle to which a charging cable having a cooling function is applied according to a third embodiment of the present invention;
FIG. 9 is a cross-sectional view illustrating the charging cable having a cooling function according to the third embodiment of the present invention; and
FIG. 10 is an enlarged perspective view illustrating a main portion of a power cable of the charging cable having a cooling function according to the third embodiment of the present invention.

### DETAILED DESCRIPTION OF EXEMPLARY EMBODIMENTS

Hereinafter, embodiments of a charging cable having a cooling function according to the present invention will be described with reference to the accompanying drawings. Thicknesses of lines or sizes of components illustrated in the drawings may be exaggerated for clarity and convenience of explanation. In addition, terms described below are defined in consideration of their functions in the present invention, and the meanings of the terms may vary depending on, for example, a user or operator's intentions or customs. Therefore, the definitions of the terms should be defined based on the content throughout this specification.

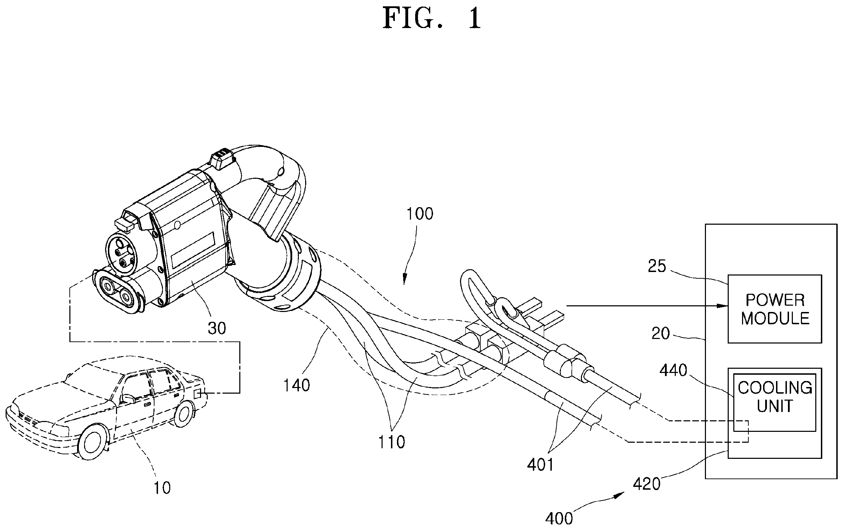

FIG. 1 is a schematic view illustrating a charging system of an electric vehicle to which a charging cable having a cooling function is applied according to a first embodiment of the present invention.

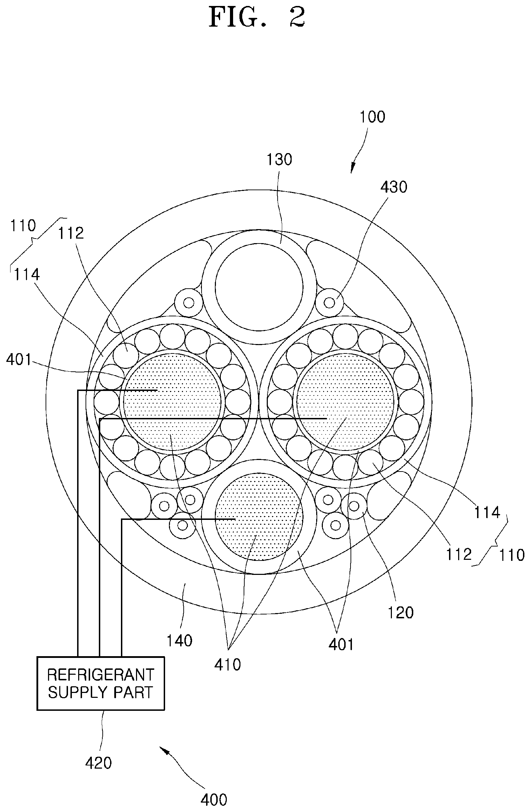

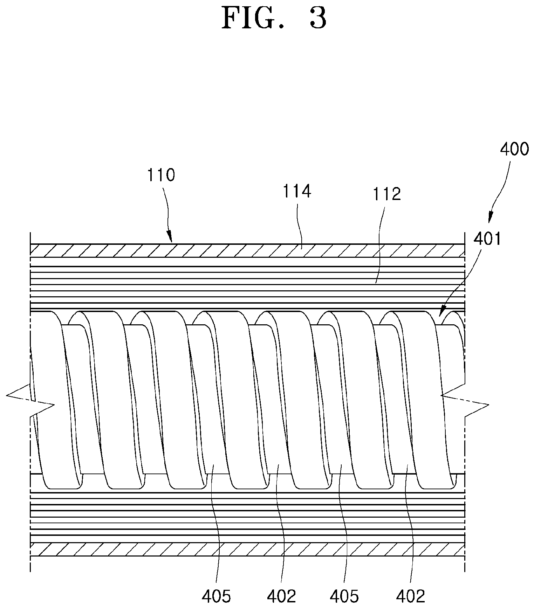

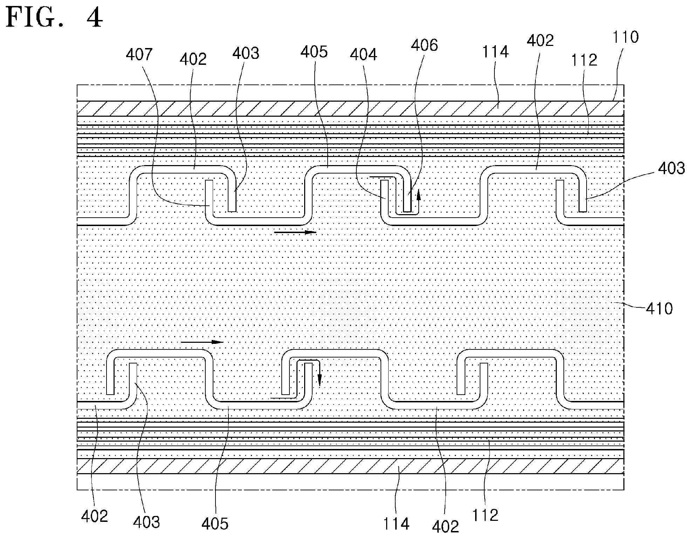

FIG. 2 is a cross-sectional view illustrating the charging cable having a cooling function according to the first embodiment of the present invention, FIG. 3 is a perspective view illustrating a main portion of a power cable of the charging cable having a cooling function according to the first embodiment of the present invention, and FIG. 4 is a cross-sectional view illustrating the main portion of the power cable of the charging cable having a cooling function according to the first embodiment of the present invention.

Referring to FIGS. 1 to 4, a charging cable 100 having a cooling function according to the first embodiment of the present invention includes a power cable 110, a signal cable 120, a grounding cable 130, a sheath140, and a cooling part 400.

Particularly, one side of the charging cable 100 according to the present invention is connected to a charging station 20 to receive power and a signal from an external device, and the other side thereof is connected to an electric vehicle 10 to guide the charging of a battery (not shown) and transmit and receive signals.

In this case, a charging connector 30 is provided on the other side of the charging cable 100. The charging connector 30 is connected to an inlet of the electric vehicle 10 and then guides the supply of electricity to the electric vehicle 10 through the charging cable 100.

The power cable 110 electrically connects the charging station 20 and the charging connector 30.

To this end, the charging station 20 includes a power module 25 for electrical connection with the charging connector 30.

In addition, the power cable 110 includes a conductor 112 and an outer insulating jacket 114.

The conductor 112 is formed of an electrically conductive material such as copper, iron, or aluminum, and is disposed as pairs or groups of conductors 112 for the flow of AC current such as positive (+) and negative (-) polarities. In this case, a thickness of the conductor 112 is determined according to an amount of current depending on a set charging time.

Particularly, each conductor 112 may be formed of a plurality of conductors bundled to have the set thickness or formed of one conductor having the set thickness.

In addition, the outer insulating jacket 114 serves to surround, insulate, and protect the corresponding single conductor 112 or bundle type conductor 112. Accordingly, various insulating materials may be applied to the outer insulating jacket 114.

In addition, the signal cable 120 serves to guide data transmission and reception with the charging station 20 for quick or slow charging. To this end, the signal cable 120 includes a material such as a copper wire or optical fiber. In addition, the signal cable 120 is disposed as one or more signal cables along the power cable 110 in the charging cable 100. However, the signal cable 120 includes an insulating layer as an outer layer.

The grounding cable 130 is disposed as one or more grounding cables along the power cable 110 and serves as a ground. Accordingly, the grounding cable 130 includes a conductive core and an insulating layer surrounding the conductive core. The insulating layer of the grounding cable 130 is formed of an insulating material such as rubber or plastic.

In addition, the sheath 140 surrounds and protects one or more power cables 110, one or more signal cables 120, one or more grounding cables 130, and the like, which are included in one charging cable 100, and is formed of an insulating material and a waterproof material.

Particularly, the sheath 140 may be formed of at least one material of polyethylene, polyurethane, polypropylene, fluororesin, rubber, polyvinyl chloride, thermoplastic elastomers, and thermoplastic polyurethane.

Meanwhile, since a diameter of the conductor 112 of the power cable 110 increases for quick charging, an amount of heat generated by the conductor 112 increases, and an amount of heat generated by terminals of the charging connector 30 increases, which increase the risk of fire.

In order to solve this, a cooling part 400 is provided.

Meanwhile, the cooling part 400 may include a refrigerant tube 401, a refrigerant 410, and a refrigerant supply part 420.

The refrigerant tube 401 is formed at any one location of the inside of the power cable 110 and the outside of the power cable 110. Particularly, the refrigerant tube 401 is formed at any one location of the inside of the power cable 110 and the outside of the power cable 110 in the sheath 140.

In the present invention, the refrigerant tube 401 is disposed in the sheath 140, disposed inside each power cable 110, , and surrounded by the sheath 140 while in contact with an outer circumference of each power cable 110.

In this case, the refrigerant tube 401 provided inside the power cable 110 is formed of a thermally conductive material to improve the cooling efficiency for the conductor 112 of the power cable 110.

In addition, the refrigerant tube 401 provided on the outside of the corresponding power cable 110 is formed of a thermally conductive material or thermally non-conductive material. Particularly, the refrigerant tube 401 provided on the outside of the corresponding power cable 110 may be formed of a thermally non-conductive material to prevent cold air from being transferred to at least one of the sheath 140, the signal cable 120, the grounding cable 130, and a temperature detection line 430.

Of course, the refrigerant tube 401 may be formed of an insulating material.

In addition, the refrigerant 410 fills each refrigerant tube 401 and is formed of a liquid material or non-liquid material.

Of course, various materials may be applied to the refrigerant 410. For convenience, the refrigerant 410 is a cooling liquid with fluidity, that is, a cooling oil, non-conductive coolant, or refrigerant gas.

Particularly, as two power cables 110 are arranged inside the sheath 140, at least three channels may be formed as flow paths of the refrigerant 410 for cooling heat-generating portions such as the conductor 112 of the power cable 110 and the terminals of the charging connector 30.

In addition, the refrigerant tube 401 for supplying (or recovering) the refrigerant 410 may be disposed in each of a positive (+) side power cable 110 and a negative (-) side power cable 110, that is, in cores, and one or more refrigerant tubes 401 for supplying (or recovering) the refrigerant 410 may be provided and disposed in contact with outer circumferences of the positive (+) side power cable 110 and the negative (+) side power cable 110.

In this case, when the refrigerant tube 401 includes a thermally conductive material, the refrigerant tube 401 may be formed of copper or a copper alloy or plating, aluminum or an aluminum alloy or plating, stainless steel, or a combination thereof. Particularly, as described above, the refrigerant tube 401 provided inside the power cable 110 includes a thermally conductive material.

In addition, in the case in which the refrigerant tube 401 includes a thermally non-conductive material, the refrigerant tube 401 may be formed of a material such as a resin or rubber. As described above, the refrigerant tube 401 provided on the outside of the power cable 110 includes a thermally non-conductive material.

In addition, the refrigerant tube 401 may include first tubes 402 and second tubes 405.

The first tubes 402 are disposed to be spaced a set distance from each other in a central axis direction of the refrigerant tube 401, and the second tubes 405 connect the adjacent first tubes 402 in the central axis direction of the refrigerant tube 401. In this case, each of the first tubes 402 and the second tube 405 is formed in a tube shape.

The first tube 402 includes a first one side flange 403 disposed at one edge and a first other side flange 404 disposed at the other edge along a central axis.

The first one side flange 403 and the first other side flange 404 extend in different directions from the first tube 402. For convenience, the first one side flange 403 is bent from the first tube 402 toward the inside of the refrigerant tube 401, and the first other side flange 404 is bent from the first tube 402 toward the outside of the refrigerant tube 401. Of course, the shapes of the first tube 402, the first one side flange 403, and the first other side flange 404 may be changed to various shapes.

In addition, the second tube 405 includes a second one side flange 406 disposed on one edge and a second other side flange 407 disposed on the other edge along the central axis.

The second one side flange 406 and second other side flange 407 extend in different directions from the second tube 405. For convenience, the second one side flange 406 is provided to face the corresponding first other side flange 404 by being bent from the second tube 405 toward the inside of the refrigerant tube 401, and second other side flange 407 is provided to face the corresponding first one side flange 403 by being bent from the second tube 405 toward the outside of the refrigerant tube 401.

Accordingly, as the first tubes 402 and the second tubes 405, which are formed in tube shapes, are alternately fitted, the refrigerant tube 401 is assembled to be bendable such that second other side flange 407 faces the corresponding first one side flange 403 and is hooked on the first one side flange 403, and the second one side flange 406 faces the corresponding first other side flange 404 and is hooked on the first other side flange 404. In addition, even when the refrigerant tube 401 is bent along an arrangement trajectory of the power cable 110, as the refrigerant tube 401 has a similar cross-sectional area thereto, a flow rate of the refrigerant 410 flowing in the refrigerant tube 401 may be maintained.

Of course, the shapes of the second tube 405, the second one side flange 406, and second other side flange 407 may be changed to various shapes.

In addition, since the refrigerant 410 flowing in the refrigerant tube 401 located inside the power cable 110 may flow to the inside and the outside of the refrigerant tube 401 through a gap between the first one side flange 403 and the second other side flange 407 which face each other and a gap between the first other side flange 404 and the second one side flange 406, the refrigerant 410 comes into direct contact with the conductor 112 of the corresponding power cable 110.

Accordingly, since the conductor 112 of the power cable 110 is cooled through a direct cooling method in which the refrigerant 410 comes into contact with the refrigerant tube 401 formed of the metal material, the cooling efficiency for the conductor 112 and the terminals of the charging connector 30 which are connected to each other can be significantly improved.

Particularly, the first tubes 402 and the second tubes 405, which are formed in the form of tubes, may be sequentially fitted to be assembled in the central axis direction in a state in which the first tubes 402 and the second tubes 405 are separated from each other, or specific portions of the first tubes 402 and the second tubes 405 may also be connected to each other like springs to form a spiral type.

The refrigerant supply part 420 serves to supply or recover the refrigerant through one axially open side of each tube type refrigerant tube 401. Accordingly, the refrigerant supply part 420 is provided as a plurality of supply lines and circulates the refrigerant 410 by guiding the supply and recovery of the refrigerant 410 to and from the refrigerant tubes 401 that are connected to each other. In this case, the refrigerant supply part 420 may be provided inside or outside the charging station 20, and for convenience, the charging station 20 is illustrated as being provided inside thereof.

In addition, the charging cable 100 may include the temperature detection line 430 in at least one of the inside and the outside of the power cable 110. For convenience, the temperature detection line 430 is provided outside the power cable 110.

The temperature detection line 430 may include a temperature sensor (not shown) therein or electrically connected thereto, and the temperature sensor may monitor a change in temperature of the terminals of the charging connector 30. In this case, the temperature detection line 430 may be disposed inside the sheath 140, and although the temperature detection line 430 may be disposed at any one location of the inside and the outside of the power cable 110, the temperature detection line 430 is illustrated as being disposed outside the power cable 110. In addition, the temperature detection line 430 may be disposed with the signal cable 120.

The number of signal cables 120 may be increased or decreased as needed.

Meanwhile, the cooling part 400 may include a cooling unit 440.

The cooling unit 440 is connected to the refrigerant tube 401 and serves to cool the liquid refrigerant 410 before the refrigerant 410 circulates. For convenience, the cooling unit 440 is a chiller provided in the charging station 20. In other words, as the refrigerant tube 401 passes through the cooling unit 440 of the charging station 20, the refrigerant 410 of the refrigerant tube 401 is cooled. Particularly, the cooling unit 440 may be included in the refrigerant supply part 420.

As a result, since the charging cable 100 according to the present invention includes the refrigerant tube 401 for transfer of the refrigerant 410 in the center (core) of the power cable 110 and allows the refrigerant 410 to flow inside and outside the refrigerant tube 401, the durability of the refrigerant tube 401 against an external impact can be secured. Since the refrigerant 410 and the conductor 112 come into direct contact with each other, the cooling performance can be improved. Since the refrigerant 410 reduces the amount of heat generated by the conductor 112 and the terminals of the charging connector 30, a power amount can be increased without increasing the diameter of the conductor 112 or while the diameter is reduced.

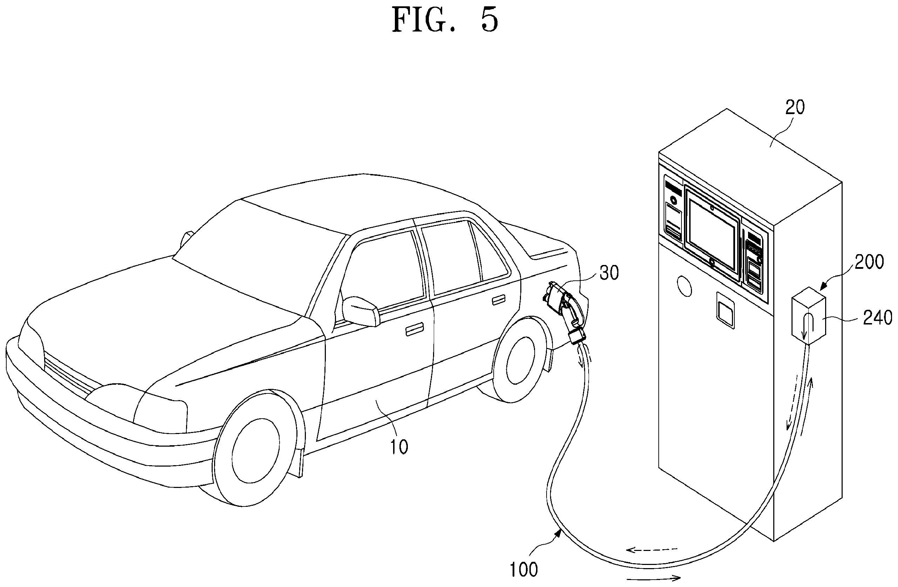

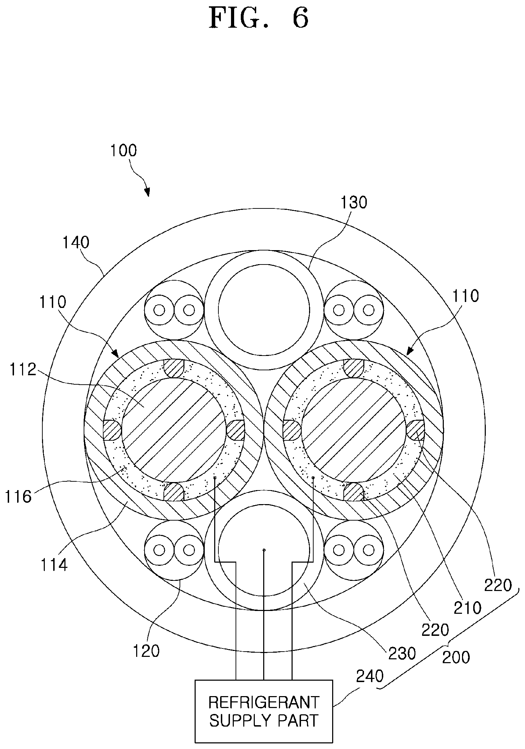

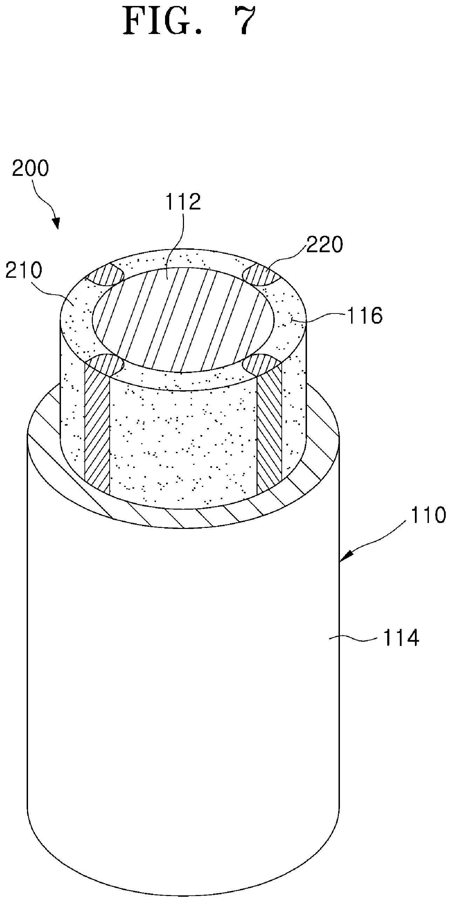

FIG. 5 is a schematic view illustrating a charging system of an electric vehicle to which a charging cable having a cooling function is applied according to a second embodiment of the present invention, FIG. 6 is a cross-sectional view illustrating the charging cable having a cooling function according to the second embodiment of the present invention, and FIG. 7 is an enlarged perspective view illustrating a main portion of a power cable of the charging cable having a cooling function according to the second embodiment of the present invention.

Referring to FIGS. 5 to 7, a charging cable 100 having a cooling function according to the second embodiment of the present invention includes a power cable 110, a signal cable 120, a grounding cable 130, a sheath140, and a cooling part 200.

Particularly, one side of the charging cable 100 according to the present invention is connected to a charging station 20 to receive power and a signal from an external device, and the other side thereof is connected to an electric vehicle 10 to guide the charging of a battery (not shown) and transmit and receive signals.

In this case, a charging connector 30 is provided on the other side of the charging cable 100. The charging connector 30 is connected to an inlet of the electric vehicle 10 and then guides the supply of electricity to the electric vehicle 10 through the charging cable 100.

The power cable 110 electrically connects the charging station 20 and the charging connector 30.

In addition, the power cable 110 includes a conductor 112 and an outer insulating jacket 114.

The conductor 112 is formed of an electrically conductive material such as copper, iron, or aluminum, and is disposed as pairs or groups of conductors 112 for the flow of AC current such as positive (+) and negative (-) polarities. In this case, a thickness of the conductor 112 is determined according to an amount of current depending on a set charging time.

Particularly, each conductor 112 may be formed of a plurality of conductors bundled to have the set thickness or formed of one conductor having the set thickness.

In addition, the outer insulating jacket 114 serves to surround, insulate, and protect the corresponding single conductor 112 or bundle type conductor 112. Accordingly, various insulating materials may be applied to the outer insulating jacket 114.

In addition, the signal cable 120 serves to guide data transmission and reception with the charging station 20 for quick or slow charging. To this end, the signal cable 120 includes a material such as a copper wire or optical fiber. In addition, the signal cable 120 is disposed as one or more signal cables 120 along the power cable 110 in the charging cable 100. However, the signal cable 120 includes an insulating layer as an outer layer.

The grounding cable 130 is disposed as one or more grounding cables 130 along the power cable 110 and serves as a ground. Accordingly, the grounding cable 130 includes a conductive core and an insulating layer surrounding the conductive core. The insulating layer of the grounding cable 130 is formed of an insulating material such as rubber or plastic.

In addition, the sheath 140 surrounds and protects one or more power cables 110, one or more signal cables 120, one or more grounding cables 130, and the like which are included in one charging cable 100 and is formed of an insulating material and a waterproof material. Particularly, the sheath 140 may be formed of at least one material of polyethylene, polyurethane, polypropylene, fluororesin, rubber, polyvinyl chloride, thermoplastic elastomers, and thermoplastic polyurethane.

Meanwhile, since a diameter of the conductor 112 of the power cable 110 increases for quick charging, an amount of heat generated by the conductor 112 increases, and an amount of heat generated by terminals of the charging connector 30 increases, which increase the risk of fire.

In order to solve this, a cooling part 200 is provided.

The cooling part 200 is provided between each of the conductors 112 and the outer insulating jacket 114 of the power cable 110 and serves to prevent overheating of the conductor 112 at the outside of the corresponding conductor 112.

Specifically, the cooling part 200 includes a refrigerant 210, partition protrusions 220, a circulation hose 230, and a refrigerant supply part 240.

The refrigerant 210 may fill a gap between the conductor 112 and the outer insulating jacket 114, which correspond to each other, or flow between the conductor 112 and the outer insulating jacket 114 which correspond to each other. Accordingly, the refrigerant 210 comes into direct contact and is heat-exchanged with the conductor 112.

In this case, the refrigerant 210 may have a rigid cubic or granular shape with heat absorption or conductivity or may be a cooling liquid with fluidity.

Of course, various materials may be applied to the refrigerant 210. For convenience, the refrigerant 210 is a cooling liquid with fluidity.

Particularly, when the refrigerant 210, such as a cooling liquid with fluidity, is tilted in a direction of its own weight or load in a cooling space 116 between the conductor 112 of the power cable 110 and the outer insulating jacket 114, the heat exchange efficiency of the refrigerant 210 may be degraded.

In order to solve this, the partition protrusions 220 are provided.

The partition protrusions 220 protrude from at least one of the conductor 112 and the outer insulating jacket 114, which correspond to each other, to be spaced a set distance from each other in a circumferential direction to divide the cooling space 116 that is continuous in the circumferential direction between the conductor 112 and the outer insulating jacket 114 which face each other.

Accordingly, the cooling space 116 is divided into a plurality of regions by the partition protrusions 220. Accordingly, as the refrigerant 210 maintains a state of remaining in each region, the heat exchange efficiency of the refrigerant 210 with the corresponding conductor 112 is improved.

In this case, one side of each of the partition protrusions 220 may be integrally provided with the conductor 112 or outer insulating jacket 114, and the other side thereof may maintain a state of being spaced a predetermined distance from the corresponding outer insulating jacket 114 or conductor 112.

Of course, various shapes may be applied to the partition protrusion 220, and the number of partition protrusions 220 is not limited.

In addition, when the partition protrusion 220 is integrally formed with the conductor 112, the partition protrusion 220 is formed of a conductive material, and when the partition protrusion 220 is integrally formed with the outer insulating jacket 114, the partition protrusion 220 is formed of an insulating material.

In addition, the circulation hose 230 guides the refrigerant 210, such as a cooling liquid with fluidity, to return toward the charging station 20. That is, the liquid refrigerant 210 may flow along the circulation hose 230, may be supplied from the charging station 20 toward the electric vehicle 10, and then returned, recovered, or circulated back to the charging station 20.

In this case, the circulation hose 230 is in contact with an outer circumferential surface of the outer insulating jacket 114 and is surrounded by the sheath 140 along with one or more power cables 110.

Particularly, the circulation hose 230 may be formed of a material such as nylon, polyethylene, polyurethane, polypropylene, fluororesin, rubber, polyvinyl chloride, thermoplastic elastomers, or thermoplastic polyurethane.

In addition, the refrigerant supply part 240 serves to allow the refrigerant 210 to forcibly flow along the circulation hose 230 and to be returned, recovered, or circulated.

To this end, one open side and the other open side of the circulation hose 230 are connected to the refrigerant supply part 240, and the refrigerant supply part 240 guides the supply and forcible circulation of the liquid refrigerant 210.

To this end, the refrigerant supply part 240 includes a pump or the like for forcibly supplying the refrigerant 210 to one side of the circulation hose 230.

Accordingly, the charging cable 100 having a cooling function according to the present invention includes one or more power cables 110, particularly, two positive (+) and negative (-) power cables 110, one or more grounding cables 130, and one or more signal cables 120 in the sheath 140, the cooling space 116 formed between the conductor 112 and the outer insulating jacket 114 of each power cable 110, and the cooling part 200 provided in the cooling space 116.

In addition, the cooling part 200 includes the refrigerant 210 which fills the gap between the conductor 112 and the outer insulating jacket 114, which correspond to each other, or is guided to flow in the gap and the partition protrusion 220 which protrudes from any one of an outer surface of the conductor 112 and an inner surface of the outer insulating jacket 114, which face each other, and divides the cooling space 116 in the circumferential direction.

In addition, the cooling part 200 includes the circulation hose 230 disposed in the sheath 140 to return, recover, or circulate back the refrigerant 210 to the charging station 20 or circulate and includes the refrigerant supply part 240 which is connected to one open side and the other open side of the circulation hose 230 and forcibly supplies the refrigerant 210 to one side of the circulation hose 230.

Particularly, in order to reduce a battery charging time of the electric vehicle 10, an amount of power supplied from the charging station 20 per unit time should be increased, which increases the amount of heat generated by the power cable 110 of the charging cable 100, and at the same time, significantly increases the amount of heat generated by the charging terminal of the charging connector 30.

In this case, in order to reduce the generated heat, the cooling part 200 is proposed to cool the power cable 110 of the charging cable and the terminals (not shown) of the charging connector 30.

Specifically, the cooling part 200 supplies the refrigerant 210, such as a cooling liquid with fluidity, from the charging station 20 to the charging cable 100 to cool the heat generated by the charging cable 100 and the charging connector 30.

The circulation hose 230 is provided in the charging cable 100 to guide the return, recovery, or circulation of the refrigerant 210.

In addition, the power cable 110 of the charging cable 100 has a structure in which the outer insulating jacket 114 is applied around the conductor 112, and the partition protrusion 220 is provided on the outer insulating jacket 114 or the conductor 112 to form the cooling space 116 between the outer insulating jacket 114 and the conductor 112. Since the cooling space 116 in which the refrigerant may flow is maintained between the outer insulating jacket 114 and the conductor 112 and the outer insulating jacket 114 or the conductor 112 includes the partition protrusion 220, the refrigerant 210 flows to effectively cool the heat generated by the charging cable 100.

In addition, the refrigerant 210 supplied to the cooling space 116 of the power cable 110 by the refrigerant supply part 240 may cool the charging cable 100, flow to the terminals of the charging connector 30 to cool the terminals, and then returned, recovered, or circulated back to the charging station 20 along the circulation hose 230 installed in the charging cable 100.

Accordingly, the charging time can be reduced by the charging cable 100 including the corresponding power cable 110.

Although not illustrated in the drawings, as moisture may be condensed on a circumferential surface of the conductor 112 due to a temperature difference due to the cold air of the refrigerant 210 and adversely affect the conductor 112 in a state in which the conductor 112 comes into direct contact with the refrigerant 210, the conductor 112 may be surrounded by a waterproof layer or insulating layer to be separated from the refrigerant 210.

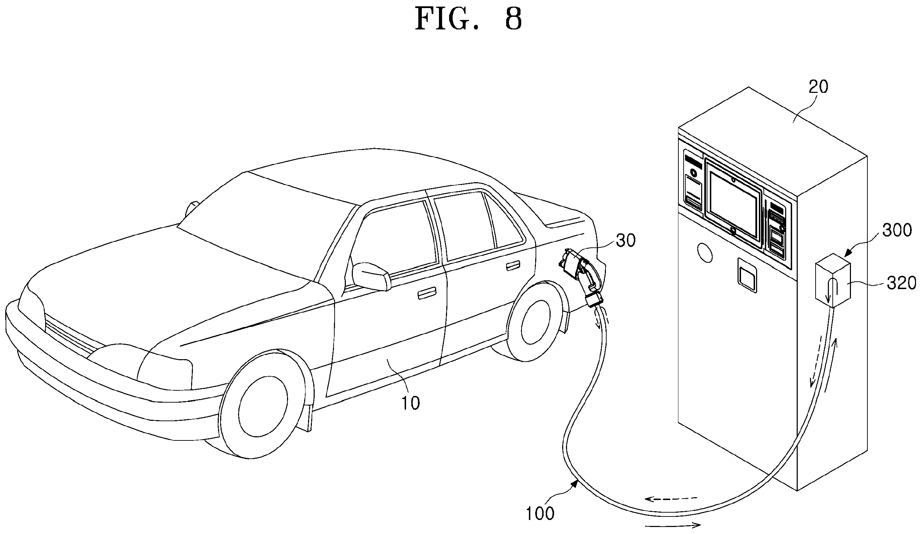

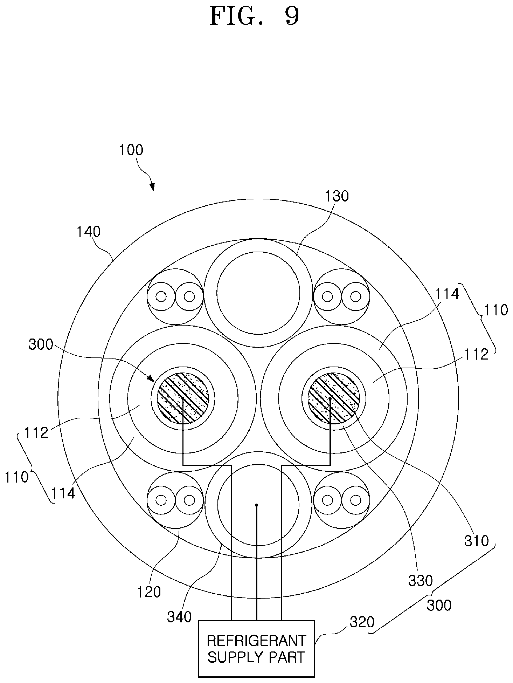

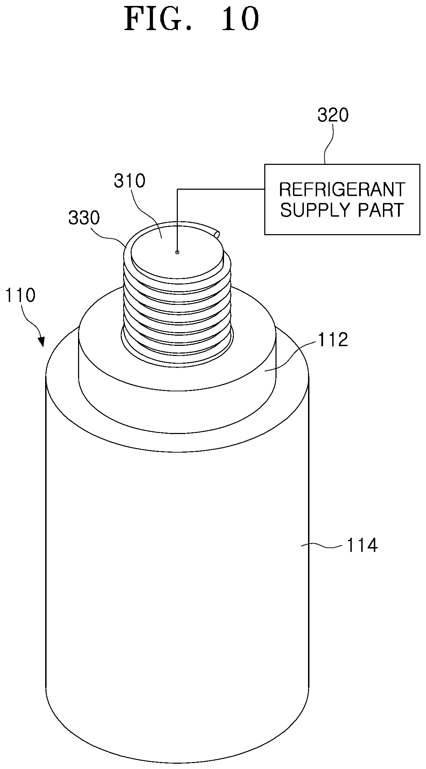

FIG. 8 is a schematic view illustrating a charging system of an electric vehicle to which a charging cable having a cooling function is applied according to a third embodiment of the present invention, FIG. 9 is a cross-sectional view illustrating the charging cable having a cooling function according to the third embodiment of the present invention, and FIG. 10 is an enlarged perspective view illustrating a main portion of a power cable of the charging cable having a cooling function according to the third embodiment of the present invention.

Referring to FIGS. 8 to 10, a charging cable 100 having a cooling function according to the third embodiment of the present invention includes a power cable 110, a signal cable 120, a grounding cable 130, a sheath140, and a cooling part 300.

In this case, contents of the power cable 110, the signal cable 120, the grounding cable 130, and the sheath 140 are substituted by the contents of those of the first embodiments and the second embodiment.

Particularly, at least two power cables 110 are formed. In the present embodiment, the power cable 110 is provided as a pair of power cables 110 for the flow of AC current such as positive (+) and negative (-) polarities.

Meanwhile, the cooling part 300 is provided inside a conductor 112 of each power cable 110 and comes into contact with the corresponding conductor 112 to serve to prevent overheating of the corresponding conductor 112 through transferred cold air.

Specifically, the cooling part 300 includes a refrigerant 310, a refrigerant supply part 320, and a heat transfer member 330.

The refrigerant 310 fills the inside of each tube type conductor 112 or flows along the inside of each conductor 112. In this case, the refrigerant 310 is a gas or liquid with superior heat transfer or heat exchange properties. Accordingly, the refrigerant 310 comes into direct contact and is heat-exchanged with the corresponding conductor 112, and thus overheating of the conductor 112 is prevented.

In addition, the refrigerant supply part 320 serves to supply the refrigerant to one axially open side of the tube type conductor 112.

Meanwhile, the heat transfer member 330 is axially inserted into each tube type conductor 112 and has heat transfer properties.

Particularly, the heat transfer member 330 may be formed of a material that allows current to flow, such as copper, iron, or aluminum.

Accordingly, the heat transfer member 330 serves to improve the heat exchange efficiency of the conductor 112 through the refrigerant 310.

In addition, the heat transfer member 330 is disposed in a spiral shape in the corresponding conductor 112 in an axial direction and serves to further improve the efficiency of cold air transfer to the conductor 112.

That is, the refrigerant 310 passes along a circumferential surface of the spiral shaped heat transfer member 330 and comes into direct contact with an inner surface of the corresponding conductor 112 to be heat-exchanged with the conductor 112, and the heat transfer member 330 absorbs cold air (latent heat) from the refrigerant 310 and comes into direct contact with the inner surface of the tube type conductor 112 to transfer the cold air to the corresponding conductor 112 as conductive heat. Accordingly, the conductor 112 is prevented from overheating.

In this case, the heat transfer member 330 may be formed in a microtube shape to guide the flow of the refrigerant 310.

Of course, a diameter of the spiral tube type heat transfer member 330 is not limited.

Although not illustrated in the drawings, as the heat transfer member 330 is manufactured in a spiral shape and should maintain an entire outer diameter or external exterior in the conductor 112, a core may be provided.

The core supports the heat transfer member 330 from the inside of the heat transfer member 330. In this case, the core may be manufactured of a thermally non-conductive material such that the heat transfer member 330 is intensively heat-exchanged with the conductor 112 at an outer side.

In addition, the refrigerant supply part 320 guides the supply and forcible circulation of the liquid refrigerant 310. Accordingly, the refrigerant supply part 320 is axially connected to one side of the conductor 112, and a circulation hose 340 is connected to the other open side of the heat transfer member 330.

In addition, the circulation hose 340 is connected to the refrigerant supply part 320

In addition, the circulation hose 340 guides the return of the liquid refrigerant 310 toward the charging station 20. That is, the liquid refrigerant 310 may flow along the circulation hose 340, may be supplied from the charging station 20 toward the electric vehicle 10, and then returned, recovered, or circulated back to the charging station 20.

In this case, the circulation hose 340 is in contact with an outer circumferential surface of the outer insulating jacket 114 and surrounded by the sheath 140 along with one or more power cables 110.

Particularly, the circulation hose 340 may be formed of any of various materials such as nylon, polyethylene, polyurethane, polypropylene, fluororesin, rubber, polyvinyl chloride, thermoplastic elastomers, and thermoplastic polyurethane.

In addition, the refrigerant supply part 320 servers to guide the refrigerant 310 to forcibly flow along the circulation hose 340 and to be returned, recovered, or circulated.

To this end, the conductor 112 and the circulation hose 340 are axially connected, and the refrigerant supply part 320 is connected to one open side of the conductor 112 and the other open side of the circulation hose 340. Accordingly, the refrigerant supply part 320 guides the supply and forcible circulation of the liquid refrigerant 310.

Accordingly, the charging cable 100 having a cooling function according to the present invention includes one or more power cables 110, particularly, two positive (+) and negative (-) power cables 110, one or more grounding cables 130, and one or more signal cables 120 in the sheath 140, and the cooling part 300 provided inside the conductor 112 of each power cable 110.

In addition, the cooling part 300 includes the refrigerant 310 which fills the inside of the tube type conductor 112 or is guided to flow along the conductor 112 and the refrigerant supply part 320 which guides the supply and circulation of the refrigerant 310 to the corresponding conductor 112.

Particularly, in order to reduce a battery charging time of the electric vehicle 10, an amount of power supplied from the charging station 20 per unit time should be increased, which increases the amount of heat generated by the power cable 110 of the charging cable 100, and at the same time, significantly increases the amount of heat generated by the charging terminal of the charging connector 30.

In this case, in order to reduce the generated heat, the cooling part 300 is proposed to cool the power cable 110 of the charging cable and the terminal (not shown) of the charging connector 30.

Specifically, the cooling part 300 supplies the liquid refrigerant 310 from the charging station 20 to the inside of the conductor 112 to cool the heat generated by the charging cable 100 and the charging connector 30.

The circulation hose 340 is provided in the charging cable 100 to guide the return, recovery, or circulation of the refrigerant 310.

Accordingly, the refrigerant 310 suppled to the conductor 112 by the refrigerant supply part 320 may cool the conductor 112 of the charging cable 100 and flow to the terminals of the charging connector 30 to cool the terminal, and then returned, recovered, or circulated back to the charging station 20 along the circulation hose 340 installed in the charging cable 100.

Accordingly, the charging time can be reduced by the charging cable 100 including the corresponding power cable 110.

Although not illustrated in the drawings, as moisture may be condensed on an outer surface of the heat transfer member 330 in contact with the conductor 112 due to a temperature difference due to the cold air of the refrigerant 310 and adversely affect the conductor 112, a waterproof layer or insulating layer may be further disposed between the conductor 112 and the heat transfer member 330.

As described above, unlike the conventional technology, in a charging cable having a cooling function according to the present invention, since a refrigerant channel is provided in at least one of the inside of a power cable and the outside of the power cable to allow a refrigerant liquid to flow, the amount of heat generated by a conductor is reduced to prevent thermal damage to the charging cable and a charging connector, thus overheating of the conductor is prevented, a charging time is reduced by increasing an amount of current, and since an outer diameter and a weight of the cable are minimized, a user's handling convenience can be improved.

In the present invention, since a refrigerant tube formed of a metal material and having flexibility is provided in a power cable, even when the refrigerant tube is bent due to deformation of the power cable, a diameter of the refrigerant tube can be maintained, and thus an amount of transferred refrigerant can be maintained.

In the present invention, since a portion of a refrigerant flowing in a refrigerant tube located inside a power cable is guided to flow to the outside from the inside of the refrigerant tube, the portion of the refrigerant can come into direct contact with a conductor of the power cable to improve cooling efficiency.

Although the present invention has been described with reference to embodiments illustrated in the accompanying drawings, these are merely exemplary. It will be understood by those skilled in the art that various modifications and other equivalent embodiments are possible from the embodiments of the present invention.

Therefore, the scope of the present invention should be defined by the appended claims.

## Claims

1. A charging cable having a cooling function comprising:
a power cable formed of one or more cables each including a conductor and an outer insulating jacket surrounding the conductor; and
a cooling part which prevents overheating of the conductor.

2. The charging cable of claim 1, comprising:
a signal cable disposed along the power cable;
a grounding cable disposed along the power cable; and
a sheath which surrounds and protects the power cable formed of the one or more cables, the signal cable formed of one or more cables, and the grounding cable formed of one or more cables and is formed of an insulating material.

3. The charging cable of claim 1 or 2, wherein the cooling part includes:
a refrigerant tube formed at any one location of an inside of the power cable and an outside of the power cable and formed of a thermally conductive material;
a refrigerant which fills the refrigerant tube and includes a liquid or non-liquid material; and
a refrigerant supply part which supplies the refrigerant to one open side of the refrigerant tube formed of one or more tubes.

4. The charging cable of any one of claims 1 to 3, wherein the cooling part includes:
a refrigerant tube, wherein the refrigerant tube includes:
first tubes which include first one side flanges on one edges and first other side flanges on the other edges, wherein the plurality of first tubes are spaced a predetermined distance from each other in a central axis direction of the power cable and formed in a tube shape; and
second tubes which are disposed between the adjacent first tubes in the central axis direction of the power cable, include second other side flanges facing the first one side flanges and hooked on the first one side flanges and second one side flanges facing the first other side flanges and hooked on the first other side flanges, are formed in a tube shape, and are connected to the first tubes corresponding thereto,
wherein the refrigerant fills the entire inside of the power cable through a gap between the first one side flanges and the second other side flanges which face each other and a gap between the first other side flanges and the second one side flanges.

5. The charging cable of any one of claims 1 to 4, wherein the power cable includes a temperature detection line at one or more locations of the inside and the outside of the power cable.

6. The charging cable of any one of claims 1 to 5, wherein:
the cooling part includes a refrigerant tube, wherein the refrigerant tube provided inside the power cable includes a thermally conductive material; and
the refrigerant tube provided outside the power cable includes a thermally conductive material or thermally non-conductive material.

7. The charging cable of any one of claims 1 to 6, wherein the cooling part includes a refrigerant which fills a gap between the conductor and the outer insulating jacket which correspond to each other or flows in the gap between the conductor and the outer insulating jacket which correspond to each other.

8. The charging cable of any one of claims 1 to 7, wherein the cooling part includes partition protrusions protruding from at least one of the conductor and the outer insulating jacket, which correspond to each other, to be spaced a set distance from each other in a circumferential direction to divide the gap between the conductor and the outer insulating jacket.

9. The charging cable of any one of claims 1 to 8, wherein:
the cooling part includes a refrigerant, wherein the refrigerant includes a liquid with fluidity; and
a circulation hose is in contact with an outer circumferential surface of the outer insulating jacket and is surrounded by the sheath along with the power cable formed of the one or more cables.

10. The charging cable of any one of claims 1 to 9 comprising a circulation hose, wherein:
one open side and the other open side of the circulation hose are connected to a refrigerant supply part; and
the refrigerant supply part guides supply and forcible circulation of the liquid refrigerant.

11. The charging cable of any one of claims 1 to 10, wherein:
the cooling part includes a refrigerant which fills an inside of each of the conductors formed in a tube shape or flows along the inside of the conductor; and
a refrigerant supply part which supplies the refrigerant to one open side of the conductor.

12. The charging cable of any one of claims 1 to 11, wherein the cooling part includes a heat transfer member provided in the conductor formed in a tube shape to improve heat exchange efficiency of the conductor through the refrigerant.

13. The charging cable of any one of claims 1 to 12, wherein the cooling part includes a heat transfer member, wherein the heat transfer member is disposed in a spiral shape inside the conductor in an axial direction to improve efficiency of cold air transfer to the conductor.

14. The charging cable of any one of claims 1 to 13, comprising a refrigerant supply part, wherein the refrigerant supply part guides supply and forcible circulation of the liquid refrigerant.

15. The charging cable of any one of claims 1 to 14 a conductor, wherein:
the other open side of the conductor is connected to a circulation hose; and
the circulation hose is connected to the refrigerant supply part.
